# FASCICULE DE BREVET EUROPEEN

(11) **EP 2 532 544 B1**
(45) Date de publication et mention de la délivrance du brevet: **14.10.2015**
(21) Numéro de dépôt: 12004352.6
(22) Date de dépôt: 08.06.2012
(51) Int. Cl.: B60H 1/32, B60H 1/00

(54) **Système de conditionnement thermique d'un habitacle et d'une batterie électrique**
Thermisches Aufbereitungssystem eines Innenraums und einer elektrischen Batterie
System for thermal conditioning of a passenger compartment and an electric battery

(30) Priorité: 08.06.2011 FR 1101742
(43) Date de publication de la demande: 12.12.2012
(73) Titulaire: Valeo Systemes Thermiques, 78320 Le Mesnil Saint Denis (FR)
(72) Inventeur: Karl, Stefan, 78112 FourQueux (FR)

(56) Documents cités:
- EP-A1- 2 301 777
- WO-A1-03/059664
- DE-A1-102008 035 216

## Description

L'invention concerne un système de conditionnement thermique d'un habitacle et d'une batterie électrique.

L'invention se rapporte au domaine des véhicules, notamment de type à propulsion électrique, et plus particulièrement aux systèmes de conditionnement thermique de tels véhicules.

Plus particulièrement, l'invention a trait à un système de conditionnement thermique d'un véhicule automobile comprenant une boucle de climatisation dans laquelle circule un fluide réfrigérant et comprenant un compresseur, au moins un évaporateur permettant de refroidir un air destiné à circuler vers l'habitacle du véhicule, et au moins un dispositif de détente, et une branche dédiée au traitement thermique d'une batterie du véhicule et comprenant au moins un échangeur de chaleur avec la batterie du véhicule, et au moins un dispositif de détente.

Les véhicules électriques ne présentant plus de moteur thermique, la fonction de chauffage de l'habitacle du véhicule n'est plus réalisée par un radiateur thermique dans lequel circule le liquide de refroidissement du moteur thermique.

Une solution proposée est d'utiliser des dispositifs de chauffage électrique, tels que des radiateurs électriques, à la place du radiateur thermique. Cette solution présente l'inconvénient de consommer l'énergie électrique de la batterie du véhicule, réduisant ainsi l'autonomie kilométrique du véhicule.

Afin de réduire la consommation électrique de la batterie du véhicule et de fournir un chauffage de l'habitacle du véhicule, il a été proposé d'utiliser une boucle de climatisation fonctionnant en mode pompe à chaleur. La boucle de climatisation comprend de manière connue un compresseur, un échangeur externe, un dispositif de détente et un évaporateur. Une telle boucle de climatisation permet classiquement de refroidir un flux d'air traversant une installation de climatisation du véhicule via l'évaporateur. Dans le cas du réchauffement du flux d'air, l'installation de climatisation comprend un condenseur interne utilisé de manière à fournir de la chaleur au flux d'air la traversant. En disposant en parallèle l'échangeur externe et le condenseur interne dans la boucle de climatisation, il devient alors possible de contourner l'échangeur externe. Cela permet de s'affranchir du phénomène de givrage provoqué par l'air extérieur de l'échangeur externe, un tel phénomène étant connu comme entraînant une baisse du coefficient de performance de la boucle de climatisation qui nécessite un apport d'énergie supplémentaire pour dégivrer l'échangeur externe.

En outre, la température de la batterie du véhicule électrique doit être la plus constante possible afin de ne pas diminuer sa durée de vie. Pour cela, il est nécessaire de disposer à la fois d'une source pour réchauffer la batterie lorsque la température extérieure est basse et d'une source pour refroidir la batterie lorsque la température extérieure est élevée.

La source de régulation thermique de la batterie est de préférence constituée d'un échangeur de chaleur dédié à la batterie et relié à un circuit d'eau transportant des calories en provenance de la boucle de climatisation. C'est pour cela qu'un tel échangeur de chaleur dédié à la batterie est considéré comme un condenseur en ce sens qu'elle puise les frigories du circuit d'eau pour réchauffer la batterie.

Pour ce faire, la boucle de climatisation comprend un premier circuit comportant l'évaporateur et un seconde circuit dédiée à la gestion thermique de la batterie, les premier et second circuit étant disposés en parallèle l'un de l'autre.

D'un point de vue fonctionnel, une telle boucle de climatisation n'est pas convenable. Il se trouve en effet que, dans le but d'un fonctionnement optimal de la boucle de climatisation, la température du fluide réfrigérant circulant au travers de l'évaporateur avoisine le zéro degré . Par contre, le maintien en la température de la batterie nécessite une température du fluide réfrigérant circulant dans le second circuit d'environ +15°C.

Il est alors difficile d'obtenir le fonctionnement de l'évaporateur en simultané de la gestion thermique de la batterie.

Il existe donc un besoin de gérer indépendamment le conditionnement thermique de la batterie du véhicule électrique et le conditionnement de l'habitacle.

Une telle gestion doit en outre permettre de prolonger la durée de vie de la batterie par un maintien à température constante et le conditionnement thermique de l'habitacle du véhicule afin d'assurer un confort thermique aux passagers du véhicule électrique.

On notera que le document DE102008035216A divulgue un système de conditionnement thermique d'un véhicule automobile qui comprend une boucle de climatisation dans laquelle circule un fluide réfrigérant et une branche dédiée au traitement thermique d'une batterie du véhicule. Plus particulièrement, les éléments de l'automobile sensibles à la température, telles qu'une batterie, sont refroidis à l'aide d'un dispositif collecteur de fluide réfrigérant dans lequel est disposée une pompe. Un but de la présente invention est de pallier tout ou partie des inconvénients de l'art antérieur relevés ci-dessus.

A cette fin, le système selon l'invention, par ailleurs conforme à la définition générique qu'en donne le préambule ci-dessus, est caractérisé en **ce qu'**il comprend un dispositif de régulation de la pression permettant d'amener le fluide réfrigérant sortant de la branche à une valeur de pression identique à celle du fluide réfrigérant sortant de l'évaporateur de la boucle de climatisation, et en ce que la branche comprend un moyen de traitement thermique disposé en aval de l'échangeur de chaleur et un moyen de traitement thermique disposé en amont de l'échangeur de chaleur, selon le sens d'écoulement du fluide réfrigérant..

De la sorte, il est rendu possible d'obtenir une valeur de pression du fluide réfrigérant circulant dans la branche qui soit différente de la valeur de pression du fluide réfrigérant circulant dans la boucle, notamment dans la partie de la boucle disposée en parallèle. Il devient alors possible de régler thermiquement l'air de l'habitacle indépendamment de l'air ou du fluide circulant autour de la batterie.

Par ailleurs, l'invention peut comporter l'une ou plusieurs des caractéristiques suivantes :
- une boucle de climatisation comprend au moins un échangeur de chaleur, le moyen de traitement thermique échangeant thermiquement avec au moins l'un des deux échangeurs de chaleur, ce qui permet d'utiliser l'énergie électrique de la batterie pour le conditionnement thermique de l'air destiné à l'habitacle ;
- ledit moyen de traitement thermique comprend au moins deux dispositifs de chauffage électrique, ce qui permet d'ajuster la température du fluide réfrigérant en deux points de la branche ;
- la branche dédiée au traitement thermique d'une batterie du véhicule comprend au moins un échangeur de chaleur avec un onduleur, un tel échangeur étant un évaporateur d'onduleur permettant le refroidissement de l'onduleur, ce qui permet aussi le réchauffement du fluide réfrigérant utilisé au traitement thermique de la batterie ;
- au moins l'un des échangeurs de chaleur est un condenseur relié à la batterie, ce qui permet un réchauffement d'un air destiné au conditionnement thermique de la batterie ;
- l'un des dispositifs de chauffage électrique est situé directement en amont de l'évaporateur d'onduleur, ce qui permet d'augmenter l'enthalpie du fluide réfrigérant à une valeur qui soit supérieure à celle en sortie de l'organe de détente ;
- l'un des dispositifs de chauffage électrique est situé directement en aval de l'échangeur de chaleur avec la batterie, ce qui permet d'augmenter l'enthalpie du fluide réfrigérant à une valeur identique à celle du fluide réfrigérant en sortie de l'évaporateur de la boucle ;
- les dispositifs de détente et le dispositif de régulation de la pression permettent une différence de pression entre celle du fluide réfrigérant circulant dans l'échangeur de chaleur dédié à la batterie et celle du fluide réfrigérant circulant dans l'évaporateur dédié à l'air conditionné destiné à circuler vers l'habitacle du véhicule, de sorte qu'il est possible de refroidir ou réchauffer la batterie tout en opérant une déshumidification de l'air conditionné destiné à l'habitacle du véhicule ;
- les dispositifs de chauffage électrique, l'un des dispositifs de détente, le dispositif de régulation de la pression sont disposés dans un même et unique module rapporté formant un dispositif dédié au contrôle et à la régulation du comportement thermique de la batterie, ce qui permet une facilité d'intégration à tout système existant étant dépourvu d'une branche dédiée au traitement thermique d'une batterie du véhicule ;
- le module rapporté formant un dispositif dédié au contrôle et à la régulation du comportement thermique de la batterie comprend aux moins quatre bornes de connexion permettant son interconnexion à la boucle de climatisation et son interconnexion aux échangeurs de chaleur dédiés à l'onduleur et à la batterie, ce qui permet une réduction du temps d'assemblage des différents composants du système en ligne de montage du véhicule ;

- le module rapporté formant un dispositif dédié au contrôle et à la régulation du comportement thermique de la batterie comprend une unité électronique de commande actionnant au moins l'un des éléments parmi le dispositif de chauffage électrique et le dispositif de régulation de la pression, ce qui permet une proximité entre l'unité électronique de commande et des éléments auxquels elle est reliée pour favoriser d'autant la diminution des risques de dysfonctionnement par rupture d'alimentation ;
- le dispositif de détente compris dans le module formant un dispositif dédié au contrôle et à la régulation du comportement thermique de la batterie est piloté selon la température du fluide réfrigérant en sortie de la branche, selon le sens d'écoulement du fluide réfrigérant dans celle-ci, ce qui permet une régulation de la détente selon la température du fluide réfrigérant pour réduire tout cas de surchauffe du fluide réfrigérant après évaporation dans l'échangeur de chaleur dédié à la batterie ;
- l'échangeur de chaleur dédié à la batterie et l'évaporateur thermique dédié à l'onduleur sont reliés en série l'un avec l'autre pour former un module unitaire d'échange thermique, de sorte qu'il est rendu aisé leur assemblage à deux des bornes du module formant un dispositif dédié au contrôle et à la régulation du comportement thermique de la batterie.

L'invention a aussi trait à un procédé de gestion thermique d'un système de conditionnement thermique selon l'une quelconque des revendications précédentes, dans lequel il comprend les étapes suivantes :
- mise en oeuvre de la boucle de climatisation dédiée au flux d'air pulsé dans l'habitacle du véhicule,
- mise en ouvre de la branche dédiée au traitement thermique d'une batterie du véhicule,
- mise en oeuvre du dispositif de régulation de la pression du fluide réfrigérant dans la branche afin de l'ajuster à la pression du fluide réfrigérant en sortie de la branche selon la pression du fluide réfrigérant en sortie d'un échangeur de chaleur, fonctionnant en mode évaporateur, de la boucle

D'autres caractéristiques, détails et avantages de l'invention ressortiront plus clairement à la lecture de la description donnée ci-après à titre indicatif en relation avec des dessins dans lesquels :
- la figure 1 représente schématiquement un système de conditionnement thermique selon l'invention ;
- la figure 2 est une représentation schématique simplifiée du système de la figure 1 ;
- la figure 3 représente le cycle thermodynamique du fluide réfrigérant de la boucle de climatisation du système de la figure 1 dans un premier mode de fonctionnement ;
- la figure 4 représente le cycle thermodynamique du fluide réfrigérant de la boucle de climatisation du système de la figure 1 dans un second mode de fonctionnement ;
- la figure 5 représente un élément particulier du système de conditionnement de la figure 1.

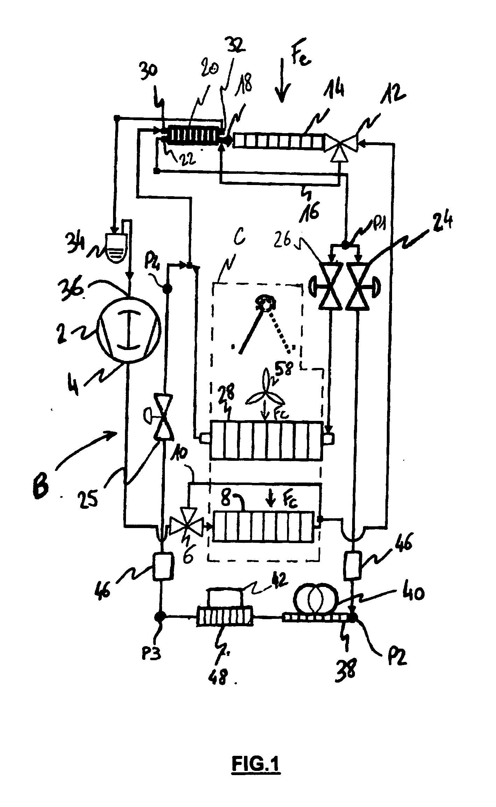

La figure 1 représente une vue schématique d'un système de conditionnement thermique d'un véhicule électrique selon l'invention.

Le système de conditionnement thermique comprend une boucle de climatisation B dans laquelle sont disposés un compresseur, au moins deux échangeurs de chaleur et au moins un dispositif de détente.

Le compresseur est de préférence un compresseur électrique 2 dans lequel un fluide réfrigérant est comprimé. Le compresseur électrique 2 comprend une sortie 4 à travers laquelle le fluide réfrigérant à haute pression et haute température s'évacue pour atteindre une première vanne 6 trois-voies. Une entrée d'un échangeur de chaleur, dit condenseur interne 8 du fait de sa localisation à l'intérieur d'un dispositif de climatisation C, est reliée à une des deux sorties de la première vanne 6 trois-voies. L'autre sortie de la première vanne 6 trois-voies est reliée à un premier conduit de contournement 10 se terminant au niveau d'une sortie du condenseur interne 8. Cela permet au fluide réfrigérant de circuler soit au travers dudit condenseur interne 8, soit au travers du premier conduit de contournement 10, selon l'état de fonctionnement de la première vanne 6 permettant de relier l'entrée soit à l'une de ses sorties, soit à l'autre de ses sorties.

La sortie du condenseur interne 8 est reliée à une deuxième vanne 12 trois-voies dont une sortie est reliée à une entrée d'un échangeur de chaleur, dit condenseur externe 14 du fait de sa disposition à l'extérieur du dispositif de climatisation C. Une autre sortie de la deuxième vanne 12 est reliée à un second conduit de contournement 16. Le condenseur externe 14 est de préférence destiné à une localisation au niveau d'une face avant du véhicule électrique. Il est destiné à être traversé par un flux d'air Fe en provenance de l'extérieur.

Une sortie du condenseur externe 14 ainsi que l'extrémité du second conduit de contournement 16 opposée à la deuxième vanne 12 sont tous deux reliés à une entrée haute pression 18 d'un échangeur de chaleur 20. Un tel échangeur 20 comprend un premier circuit hydraulique conçu pour échanger thermiquement avec un second circuit hydraulique dans lesquels circule un fluide réfrigérant à basse pression et haute pression.

Ainsi, le conduit de contournement 16 permet au fluide réfrigérant de contourner le condenseur externe 14 et de ne pas le traverser. Le fluide réfrigérant passe alors directement de la deuxième vanne 12 trois-voies à l'échangeur de chaleur 20.

Le fluide réfrigérant, toujours à haute pression, circule au travers du circuit haute pression de l'échangeur de chaleur 20, sortant de ce dernier par une sortie 22 haute pression 20 pour atteindre deux dispositifs de détente 24, 26. Les deux dispositifs de détente 24, 26 sont montés en parallèle l'un par rapport à l'autre.

Le second dispositif de détente 26 est relié à un échangeur de chaleur, qualifié d'évaporateur interne 28 par sa localisation à l'intérieur de l'installation de climatisation C. Du fait de la présence du second dispositif de détente 26 en amont de évaporateur interne 28 selon le sens d'écoulement du fluide, l'évaporateur interne 28 est traversé par le fluide réfrigérant à l'état de basse pression et de basse température. En sortie de l'évaporateur interne 28, le fluide réfrigérant circule jusqu'à une entrée basse pression 30 de l'échangeur de chaleur 20. Le fluide réfrigérant alors à basse pression, traverse le circuit basse pression de l'échangeur de chaleur 20 et échange de la chaleur avec le fluide réfrigérant à haute pression circulant au travers du circuit haute pression. Le fluide réfrigérant à basse pression sort de l'échangeur de chaleur 20 via une deuxième sortie 32 pour atteindre un accumulateur 34. Une entrée 36 du compresseur électrique 2 est reliée à la sortie de l'accumulateur 34.

La boucle de climatisation B décrite ci-dessus est ainsi destinée au traitement thermique de l'air Fc qui est destiné à être pulsé vers l'habitacle du véhicule par le biais d'un ventilateur 58 dédié.

Le système de conditionnement thermique comprend en outre une branche U destinée au traitement thermique d'une réserve d'énergie électrique 42, du type à cellules de batterie, et d'un onduleur 40 formant un moyen de commande du fonctionnement d'un moteur électrique (non représenté) rendant apte le déplacement du véhicule.

Pour ce faire, la branche U comprend un échangeur de chaleur, dit évaporateur d'onduleur 38. L'évaporateur d'onduleur 38 assure le refroidissement d'un onduleur 40 commandant électriquement la batterie 100. Un autre échangeur de chaleur, dit échangeur batterie 48, permet de contrôler la température de la batterie soit en réchauffant ses cellules, soit en les refroidissant.

Selon un mode de réalisation préféré, l'échangeur batterie 48 est du type sur eau, de sorte que la gestion thermique de la batterie s'opère par l'intermédiaire d'un fluide réfrigérant.

Selon une variante de réalisation, l'échangeur batterie 48 est du type sur air, de sorte que la gestion thermique de la batterie s'opère par l'intermédiaire d'un flux d'air pulsé autour des cellules de la batterie.

Indépendamment du type sur eau ou sur air, l'échangeur batterie 48 se comporte soit comme un évaporateur pour le refroidissement de la batterie, soit comme un condenseur pour le réchauffement de la batterie.

La branche U dédiée au traitement thermique de la batterie 42 et de l'onduleur 40 comprend en outre un premier moyen de traitement thermique qui, selon un mode de réalisation préféré mais nullement limitatif, est un dispositif de chauffage électrique 46. Un tel dispositif permet, lors de sa mise en fonctionnement, de chauffer le fluide réfrigérant. Dans ce cas, un tel dispositif est assimilable à un évaporateur.

La branche U comprend le premier dispositif de détente 24 relié par son entrée à la sortie haute pression 22 de l'échangeur de chaleur 20, et par sa sortie à un dispositif de chauffage électrique 46 de sorte qu'il est rendu possible de moduler la température du fluide réfrigérant circulant dans la branche U, notamment à l'entrée de celle-ci, tout en maintenant le fluide réfrigérant à basse pression. Par conséquent, tout en maintenant une pression basse, l'enthalpie du fluide réfrigérant est apte à augmenter sous l'effet du dispositif de chauffage électrique 46.

Ce dernier est relié à l'évaporateur d'onduleur 38 disposé en série de l'échangeur de batterie 48 de sorte que le fluide réfrigérant traverse l'évaporateur d'onduleur 38, puis l'échangeur de batterie 48.

La branche U comprend aussi un second moyen de traitement thermique du fluide réfrigérant circulant en sortie de la branche U, et qui est également un dispositif de chauffage électrique 46 identique à celui du premier moyen de traitement thermique.

A titre d'exemple, les dispositifs de chauffage électrique 46 sont formés par des éléments résistifs à coefficient de température positif.

Le second moyen de traitement thermique est relié à un moyen de régulation de la pression, qui est du type d'un dispositif de régulation de pression 25 du fluide réfrigérant. Un tel dispositif de régulation de pression 25 permet de contrôler la pression du fluide réfrigérant sortant de la branche U. Cela permet de régler le fluide réfrigérant sortant de la branche U à une valeur de pression sensiblement identique à celle en sortie de l'évaporateur interne 28 situé dans la boucle de climatisation B.

La sortie du dispositif de régulation de pression 25 disposé en aval de la branche U est reliée à la deuxième entrée 30 de l'échangeur de chaleur interne 20.

Par conséquent, le fluide réfrigérant traversant le dispositif de régulation de pression 25 atteint l'échangeur de chaleur 20 puis l'accumulateur 34 et enfin le compresseur 2.

La mise en oeuvre du système de conditionnement thermique va maintenant être décrite.

Lors de conditions climatiques hivernales, la batterie 42 et l'habitacle du véhicule ont besoin d'être chauffés. Pour ce faire, les calories du fluide réfrigérant sont libérées par le condenseur interne 8 ce qui, sous l'effet du ventilateur 58, génère un flux d'air chaud dans l'habitacle du véhicule. D'un autre côté, la batterie 42 est chauffée par l'intermédiaire du dispositif de chauffage électrique 46 qui est alors mis en oeuvre et chauffe la batterie 42.

C'est ainsi que de manière avantageuse, l'énergie électrique utilisée par le dispositif de chauffage électrique 46 sous la forme d'énergie thermique participe également à la mise en oeuvre de la boucle de climatisation B, ce qui tend à améliorer son coefficient de performance.

Le fluide réfrigérant, à haute pression et haute température du fait de la compression du compresseur, traverse la première vanne 6 trois-voies puis traverse le condenseur interne 8. La première vanne 6 trois-voies interdit donc le passage du fluide réfrigérant vers le canal de contournement 10. A l'intérieur du condenseur interne 8, le fluide réfrigérant cède de la chaleur au flux d'air Fc traversant l'installation de climatisation C, ce flux d'air Fc augmente la température de l'air de l'habitacle. Le fluide réfrigérant circule ensuite à travers la deuxième vanne 12 trois-voies et contourne le condenseur externe 14 via le conduit de contournement 16. La deuxième vanne 12 trois-voies interdit donc le passage du fluide réfrigérant vers le condenseur externe 14. Le fluide réfrigérant traverse ensuite le circuit haute pression de l'échangeur de chaleur 20 puis atteint les deux dispositifs de détente 24, 26.

Le fluide réfrigérant, en traversant le premier dispositif de détente 24, subit une détente qui l'amène à l'état basse pression et basse température. Ensuite le fluide réfrigérant atteint le premier moyen de traitement thermique puis l'évaporateur d'onduleur 38. Etant donné la grande dissipation thermique de l'onduleur 40 lors de son fonctionnement, ce dernier est utilisé en complément du dispositif de chauffage électrique 46, de sorte que le fluide réfrigérant est réchauffé sous une infime consommation d'énergie électrique. Ainsi, le fluide réfrigérant traversant l'évaporateur d'onduleur 38 capte de la chaleur en provenance de l'onduleur 40, ce qui permet à la fois de refroidir ce dernier et réchauffer le fluide réfrigérant destiné par la suite à circuler dans l'échangeur de batterie 48.

Afin d'assurer un fonctionnement optimale de la boucle de climatisation B, c'est-à-dire obtenir un coefficient de performance optimal, l'énergie thermique du dispositif de chauffage électrique 46 est utilisée pour chauffer le fluide réfrigérant traversant l'échangeur batterie 48. Autrement dit, l'énergie électrique puisée de la batterie 42 par le dispositif de chauffage électrique 46 est à la fois utilisée pour la fonction de chauffage de la batterie 42 et pour la fonction d'apport énergétique pour la boucle de climatisation B. Une telle reconversion de l'énergie électrique en énergie thermique dans la boucle de climatisation permet d'assurer un cycle thermodynamique performant. En effet, l'énergie sous forme de chaleur, cédée par le fluide réfrigérant au niveau du condenseur interne 8 pour chauffer l'air de l'habitacle, doit être récupérée pour compléter le cycle thermodynamique du fluide réfrigérant lorsqu'il circule à l'intérieur de la boucle de climatisation B. Etant donné que l'air extérieur est à basse température (conditions climatiques hivernales), il ne peut pas fournir l'énergie nécessaire au fluide réfrigérant pour terminer son cycle thermodynamique.

L'apport énergétique provient donc de chacun des dispositifs de chauffage électrique 46, ainsi que de l'évaporateur onduleur 38. Par conséquent, le fluide réfrigérant circulant au travers de la branche U capte de la chaleur en provenance de l'onduleur 40 et de chacun des dispositifs de chauffage électrique 46. Il traverse ensuite l'échangeur de chaleur interne 20, l'accumulateur 34 et rejoint le compresseur 2.

Parallèlement à la circulation du fluide réfrigérant dans la branche U, une quantité du fluide réfrigérant traverse le second dispositif de détente 26 et atteint l'évaporateur interne 28. Il capte de la chaleur en provenance du flux d'air Fc circulant à l'intérieur de l'installation de climatisation C. Dans le but de minimiser la consommation électrique de la boucle de climatisation B, c'est-à-dire du compresseur 2 électrique, l'installation de climatisation C fonctionne en mode recyclage d'air, c'est-à-dire que le flux d'air Fc circulant à l'intérieur de l'installation de climatisation C provient de l'habitacle du véhicule et non de l'extérieur. En sortie de l'évaporateur interne 28, le fluide traverse l'échangeur de chaleur 20 puis l'accumulateur 34 et enfin le compresseur 2. Ce mode de fonctionnement recyclage de l'installation de climatisation C est choisi pour les raisons suivantes.

Le système de conditionnement thermique selon l'invention permet de diminuer la consommation électrique de la batterie tout en assurant un chauffage de la batterie et de l'air de l'habitacle. A cette fin, lors de conditions climatiques hivernales, les différents dispositifs de chauffage électrique 46 et la boucle de climatisation B sont mis en oeuvre et l'installation de climatisation C fonctionne en mode recyclage total ou partiel. Ainsi, plus la boucle de climatisation C fonctionne, plus l'air de l'habitacle se réchauffe. De ce fait, la température de l'air de l'habitacle devient au fur et à mesure suffisamment élevée pour que l'air de l'habitacle puisse être utilisée en tant que source d'énergie thermique pour la boucle de climatisation B.

Une telle source d'énergie est puisée du flux d'air de l'habitacle traversant le deuxième échangeur de chaleur 28. En effet, lorsque la température du le fluide réfrigérant est inférieure à la température de l'air de l'habitacle traversant l'évaporateur interne 28, le fluide réfrigérant capte les calories présentes dans l'air de recyclage. En conséquence, la consommation électrique du dispositif de chauffage électrique 46 est réduite au fur et à mesure que l'air de l'habitacle se réchauffe. Autrement dit, plus l'air de l'habitacle se réchauffe, plus cet air remplace l'énergie thermique fournie par chacun des dispositifs de chauffage électrique 46. Pour ce faire, on mesure la température de l'air de l'habitacle via un capteur de température. Au final, chacun des dispositifs de chauffage électrique 46 ne consomme que l'énergie électrique nécessaire pour chauffer la batterie 42 et la boucle de climatisation B fonctionne comme une pompe à chaleur à consommation d'énergie électrique réduite, les calories provenant en partie de l'air qu'elle réchauffe.

En combinant le système de conditionnement thermique selon l'invention avec l'installation de climatisation C fonctionnant en mode recyclage, l'air de l'habitacle est maintenu à la température désirée, la température de la batterie 42 reste constante et la consommation de l'énergie électrique de la batterie est minime. En outre, puisque l'évaporateur interne 28 fonctionne, l'humidité présente dans l'air de l'habitacle est éliminée par la condensation de l'eau au niveau de cet évaporateur interne 28. Cela permet d'éliminer avantageusement le risque d'apparition de buée sur le pare-brise lorsque l'installation de climatisation C est en mode recyclage.

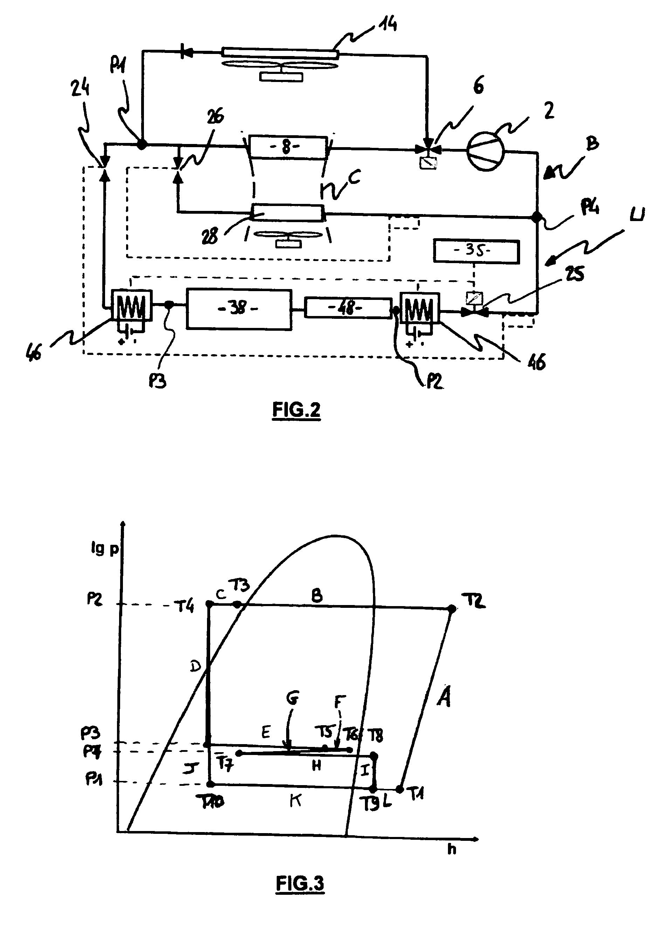

La figure 3 illustre le cycle thermodynamique du fluide réfrigérant lorsque la boucle de climatisation B est mis en oeuvre pour des conditions climatiques hivernales. Ce cycle représente l'enthalpie h du fluide réfrigérant en fonction de sa pression P.

En entrée du compresseur 2, le fluide a une enthalpie T1 et à une pression P1, ici considérée comme l'état basse pression. En sortie du compresseur 2 et donc une fois compressé, l'enthalpie du fluide réfrigérant augmente à une valeur T2 qui est supérieure à T1 et à une pression P2 supérieure à P1. La pression P2 est considérée comme l'état haute pression du fluide réfrigérant. Cette compression du fluide réfrigérant correspond à une étape A du cycle thermodynamique.

Lorsque le fluide réfrigérant traverse le condenseur interne 8, il cède de l'énergie au flux d'air Fc de l'installation de climatisation C de sorte que son enthalpie diminue jusqu'à une valeur T3 (étape B). Ensuite, du fait du passage à l'intérieur de l'échangeur de chaleur 20, le fluide réfrigérant cède encore une partie de son énergie, de sorte que l'enthalpie s'abaisse jusqu'à une valeur T4 (étape C). Entre les valeurs d'enthalpie T2 et T4, la pression du fluide réfrigérant reste constante et égale à P2.

Le fluide réfrigérant traversant le premier dispositif de détente 24 baisse en pression pour atteindre une valeur P3 (étape D) à iso enthalpie. Pendant le passage au travers du premier dispositif de chauffage électrique 46 (étape E), le fluide capte l'énergie électrique transformée en énergie thermique de sorte que la valeur de son enthalpie augmente jusqu'à la valeur T5. Ensuite, le fluide capte de la chaleur en provenance de l'onduleur 40 et sa température augmente de sorte que l'enthalpie du fluide réfrigérant augmente en traversant l'évaporateur d'onduleur 38 (étape F) jusqu'à une valeur T6.

En traversant l'échangeur de batterie 48, lequel se comporte comme un condenseur, le fluide réfrigérant réchauffe cette dernière en lui cédant une partie de son énergie. Cela a pour effet de réduire l'enthalpie du fluide réfrigérant jusqu'à la valeur T7. Du fait même de la conception de l'échangeur batterie 48, le fluide réfrigérant subit une détente de sorte que sa pression est abaissée pour atteindre la valeur P7 (étape G).

Ensuite l'enthalpie du fluide réfrigérant augmente de nouveau jusqu'à une valeur T8 via le passage dans le second dispositif de chauffage électrique 46 (étape H).

Entre les valeurs T7 et T8, la pression du fluide réfrigérant reste constante mais supérieure à P1, qui est une valeur qui correspond à la pression du fluide réfrigérant circulant dans l'évaporateur interne 28 de la boucle de climatisation B.

En traversant le dispositif de régulation de pression 25, il est rendu possible de contrôler la valeur de la pression (P7) du fluide réfrigérant en sortie de la branche U, notamment selon un abaissement de sa valeur à une valeur identique (P1) à celle du fluide réfrigérant en entrée du compresseur (étape 1).

En parallèle de la circulation du fluide réfrigérant dans la branche U, une autre quantité de fluide réfrigérant traverse le second dispositif de détente 26 de sorte que sa pression baisse pour atteindre respectivement la valeur P1 (étape J). Cette transformation de l'état liquide à l'état diphasique du fluide réfrigérant s'effectue sous une même valeur d'enthalpie de sorte que T4 est égale à T10. Ensuite le fluide réfrigérant traverse l'évaporateur interne 28, captant au passage les calories présentes dans l'air, de sorte que son enthalpie augmente et génère une transformation du fluide réfrigérant d'un état diphasique à un état gazeux.

Enfin, l'enthalpie du fluide réfrigérant revient à la valeur T1 après son passage dans l'échangeur de chaleur 20 (étape L).

La figure 3 permet d'illustrer la différence entre l'enthalpie du fluide réfrigérant dédiée à la gestion thermique de la batterie et l'enthalpie du fluide réfrigérant dédié au traitement thermique de l'habitacle. Plus particulièrement, la variation d'enthalpie du fluide réfrigérant (étape G) circulant dans l'échangeur de batterie 48 pour maintenir notamment à température constante la batterie 42, est différente de la variation d'enthalpie du fluide réfrigérant (étape K) circulant dans l'évaporateur interne 28. Il devient ainsi possible de régler la température du fluide réfrigérant circulant dans l'évaporateur de batterie 48 à une valeur constante d'environ +15°C tandis que le fluide réfrigérant circulant dans l'évaporateur est à une valeur d'environ 0°C. Une telle régulation s'effectue en outre à des valeurs de pression différentes.

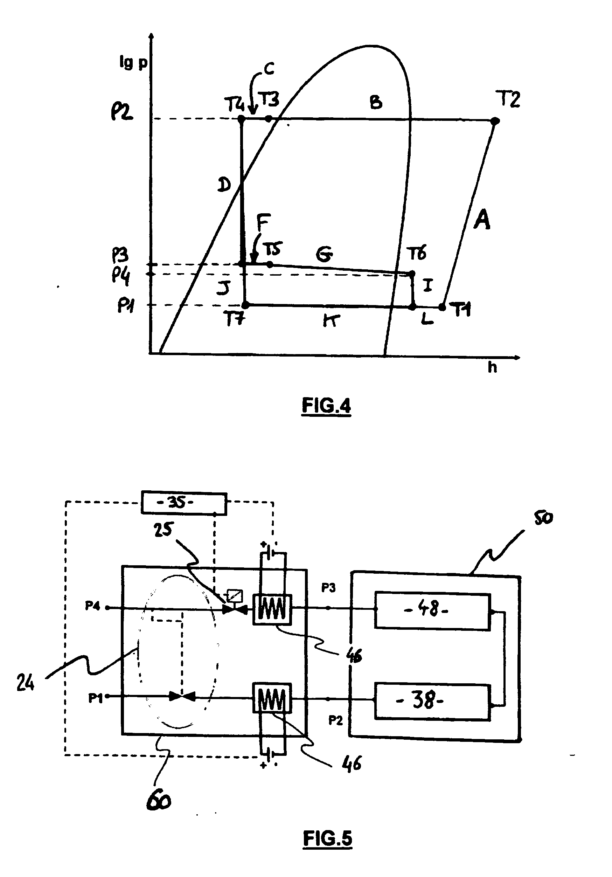

La figure 4 illustre un deuxième mode de fonctionnement du système de conditionnement thermique selon l'invention.

Lors de conditions climatiques estivales, la batterie 42 et l'habitacle du véhicule ont cette fois-ci besoin d'être refroidies. Pour cela, chacun des dispositifs de chauffage électrique 46 est mis hors état de fonctionnement de sorte qu'ils ne produisent par d'apport de calorie au fluide réfrigérant qui les traverse.

Le fluide réfrigérant, à haute pression et haute température du fait de la compression du compresseur, traverse la première vanne 6 trois-voies puis traverse le canal de contournement 10 permettant de contourner le condenseur interne 8. La première vanne 6 trois-voies interdit donc le passage du fluide réfrigérant dans le condenseur interne 8.

Le fluide réfrigérant circule ensuite vers la deuxième vanne 12 trois-voies puis dans le condenseur externe 14. A l'intérieur du condenseur externe 14, le fluide réfrigérant cède de la chaleur au flux d'air ambiant Fe traversant le condenseur externe 14. La deuxième vanne 12 trois-voies interdit donc le passage du fluide réfrigérant vers le conduit de contournement 16 du condenseur externe 14. Le fluide réfrigérant traverse ensuite le circuit haute pression de l'échangeur de chaleur 20 puis atteint les deux dispositifs de détente 24, 26.

Le fluide réfrigérant traversant le premier dispositif de détente 24 subit une détente qui l'amène à l'état basse pression et basse température. Cette dernière est d'environ +15°C. Ensuite le fluide réfrigérant atteint le premier moyen de traitement thermique sans qu'aucun échange thermique ne soit réalisé du fait de son état de mise hors fonctionnement. Les résistances du dispositif de chauffage électrique 46 sont de ce fait déconnectées de la batterie 42 via une unité électronique de contrôle 35.

Le fluide réfrigérant circulant dans la branche U dédié à la gestion thermique de la batterie 42 et de l'onduleur 40 circule successivement au travers de l'évaporateur d'onduleur 38 et de l'échangeur de batterie 48 qui fonctionnent alors en tant qu'évaporateurs de sorte qu'ils absorbent les calories de la batterie 42 et de l'onduleur 40. En traversant ces deux éléments 40 et 42 le fluide réfrigérant est réchauffé, ce qui augmente son enthalpie.

En simultané, le fluide réfrigérant traverse le second dispositif de détente 26 avant d'atteindre l'évaporateur interne 28 dans lequel il absorbe les calories en provenance du flux d'air Fc circulant à l'intérieur de l'installation de climatisation C.

Le fluide réfrigérant sortant de l'évaporateur interne 28 et de la branche U dédié à la gestion thermique de la batterie, le fluide réfrigérant circule dans le circuit basse pression de l'échangeur de chaleur 20 afin d'y être réchauffé.

Il rejoint ensuite l'accumulateur 34 puis l'entrée 36 du compresseur 2, terminant ainsi un cycle de fonctionnement.

En combinant ainsi le système de conditionnement thermique selon l'invention avec l'installation de climatisation C, l'air de l'habitacle est maintenu à la température désirée alors la température de la batterie 42 reste constante et de préférence à une température de +15°C.

La figure 4 illustre le cycle thermodynamique du fluide réfrigérant pour le système de conditionnement thermique de la figure 1 lorsque le refroidissement de l'air de l'habitacle et de la batterie sont requis.

En entrée du compresseur 2, le fluide réfrigérant a une valeur d'enthalpie T1 et une pression P1, ici considérée comme son état basse pression. En sortie du compresseur 2, le fluide réfrigérant à l'état gazeux est à une enthalpie de valeur T2 supérieure à T1 et à une pression P2 supérieure à P1. La pression P2 est considérée comme son état haute pression. Cette compression du fluide réfrigérant correspond à une étape A du cycle thermodynamique.

Lorsque le fluide réfrigérant traverse le condenseur externe 14, il cède de la chaleur au flux d'air ambiant Fe et son enthalpie diminue jusqu'à une valeur T3 (étape B). Ensuite, le passage à l'intérieur de l'échangeur de chaleur 20 abaisse l'enthalpie du fluide réfrigérant jusqu'à une valeur T4 (étape C). Entre les températures T2 et T4, la pression du fluide réfrigérant reste constante à P2.

Le fluide réfrigérant, en traversant le premier dispositif de détente 24, baisse en pression pour atteindre la valeur P3 (étape D). Pendant son passage au travers de l'évaporateur d'onduleur 38 (étape F), le fluide réfrigérant absorbe les calories dégagées par le fonctionnement de l'onduleur de sorte que son enthalpie augmente jusqu'à la valeur T5. Ensuite, l'enthalpie du fluide réfrigérant augmente en traversant l'échangeur batterie 48 (étape G) qui se comportement fonctionnellement comme un évaporateur. Le fluide réfrigérant absorbe ainsi les calories en provenance de la batterie 42 de sorte que son enthalpie augmente jusqu'à une valeur T6.

Entre les valeurs T5 et T6 d'enthalpie, la pression du fluide réfrigérant subit une détente due à la conception même de l'échangeur batterie 48 qui tend à diminuer sa pression à une valeur P4 qui est supérieure à P1.

En traversant le dispositif de régulation de pression 25, le fluide réfrigérant subit une détente de sorte qu'en termes de pression, sa valeur devient identique à celle du fluide réfrigérant en entrée du compresseur (étape 1).

En parallèle, le fluide réfrigérant traverse le second dispositif de détente 26 de sorte que sa pression baisse pour atteindre la valeur P1 relative à l'état basse pression. Une telle détente transforme l'état du fluide réfrigérant de liquide à diphasique, sous une même valeur T10 (étape J) d'enthalpie. Ensuite le fluide réfrigérant traverse l'évaporateur interne 28 au travers duquel l'échange thermique entre le fluide réfrigérant et l'air circulant dans l'installation de climatisation C, tend à modifier son enthalpie à la hausse pour revenir à la valeur en sorite du dispositif de régulation de pression 25 (étape K).

Enfin, l'enthalpie du fluide réfrigérant revient à la valeur T1 après son passage dans l'échangeur de chaleur 20 (étape L).

La figure 4 permet d'illustrer la différence entre la gestion thermique de la batterie et la gestion thermique de l'air dédié à l'habitacle, dans un mode de fonctionnement estival du système de l'invention. Il est ainsi rendu possible de gérer de manière indépendante la pression et l'enthalpie du fluide réfrigérant (étape F) circulant dans l'échangeur de batterie 48, pour maintenir notamment à température constante la batterie 42, et la pression et de la température du fluide réfrigérant (étape K) circulant dans l'évaporateur interne 28. Il devient ainsi possible de régler la température du fluide réfrigérant circulant dans l'évaporateur de batterie 48 à une valeur constante d'environ +15°C tandis que le fluide réfrigérant circulant dans l'évaporateur est à une valeur d'environ 0°C.

Selon l'invention, il est avantageusement rendu possible de réunir les dispositifs de chauffage électrique 26, le premier dispositif de détente 24, le dispositif de régulation de la pression 25 dans un même et unique module formant un dispositif 60 dédié au contrôle et à la régulation du comportement thermique de la batterie 42.

De manière avantageuse, un tel dispositif 60 dédié au contrôle et à la régulation du comportement thermique de la batterie 42, dont un mode de réalisation détaillé est illustré sur la figure 5, est facilement intégrable dans un système de climatisation existant.

Il comprend à cet effet quatre bornes de connexion P1, P2, P3 et P4 qui lui assurent rapidité et simplicité de branchement à une boucle de climatisation B existante.

Les bornes de connexion P1 et P4 sont destinées à l'interconnexion de la branche U de traitement thermique de la batterie 42 et de la boucle B de climatisation existant. Les bornes de connexion P2 et P3, sont quant à eux destinés à l'interconnexion d'un module d'échange thermique 50 au dispositif 60 dédié au contrôle et à la régulation du comportement thermique de la batterie 42.

Comme cela est représenté sur la figure 5, ledit module d'échange thermique 50 comprend un échangeur de batterie 48 et un évaporateur d'onduleur 38 reliés en série l'un avec l'autres.

En termes de fabrication, le module d'échange thermique 50 ainsi que le dispositif 60 dédié au contrôle et à la régulation du comportement thermique de la batterie 42 sont rapportés sur une boucle de climatisation B dépourvue d'une branche U dédiée au traitement thermique d'une batterie.

Le temps de fabrication d'un système de climatisation selon l'invention nécessite seulement l'ajout :
- du temps de réalisation des interconnexions du dispositif 60 dédié au contrôle et à la régulation du comportement thermique de la batterie 42 à la boucle B de climatisation, par l'intermédiaire des bornes de connexion P1 et P4, et
- du temps de réalisation des interconnexions du module d'échange thermique 50 au dispositif 60 dédié au contrôle et à la régulation du comportement thermique de la batterie 42, par l'intermédiaire des bornes de connexion P2 et P3,
- le dispositif 60 dédié au contrôle et à la régulation du comportement thermique de la batterie 42 ainsi que le module unitaire d'échange thermique 50 ayant été préalablement fabriqués.

Le module formant le dispositif 60 dédié au contrôle et à la régulation du comportement thermique de la batterie 42 comprend le premier dispositif de détente 24 et son dispositif de régulation de la pression selon la température du fluide réfrigérant en sortie de la branche U. Il comprend aussi le dispositif de régulation de la pression 25 et les dispositifs de chauffage électrique 46. Ces trois éléments sont connectés à une unité électronique de contrôle 35.

Selon une variante de réalisation du module formant le dispositif 60 dédié au contrôle et à la régulation du comportement thermique de la batterie 42, comprend une unité électronique de contrôle 35. De manière avantageuse, les différentes connexions électriques préalablement réalisées permettent de s'affranchir du temps de connexion électrique, réduisant d'autant le temps et la facilité de montage et d'intégration du module formant le dispositif 60 dédié au contrôle et à la régulation du comportement thermique de la batterie 42 à la boucle B de climatisation.

Un tel module formant le dispositif 60 dédié au contrôle et à la régulation du comportement thermique de la batterie 42 est compact, ce qui en assure son intégration.

## Revendications

1. Système de conditionnement thermique d'un véhicule automobile comprenant :
- une boucle de climatisation (B) dans laquelle circule un fluide réfrigérant et comprenant un compresseur (2), au moins un évaporateur (28) permettant de refroidir un air destiné à circuler vers l'habitacle du véhicule, et au moins un dispositif de détente (26),
- une branche (U) dédiée au traitement thermique d'une batterie (42) du véhicule et comprenant au moins un échangeur de chaleur (48) avec la batterie (42) du véhicule, et au moins un dispositif de détente (24),
**caractérisé en ce qu'**il comprend un dispositif de régulation de la pression (25) permettant d'amener le fluide réfrigérant sortant de la branche (U) à une valeur de pression identique à celle du fluide réfrigérant sortant de l'évaporateur (28) de la boucle de climatisation (B), et **en ce que** la branche (U) comprend un moyen de traitement thermique disposé en aval de l'échangeur de chaleur (48) et un moyen de traitement thermique disposé en amont de l'échangeur de chaleur (48), selon le sens d'écoulement du fluide réfrigérant.

2. Système selon la revendication 1, dans lequel une boucle de climatisation (B) comprend au moins un échangeur de chaleur (8), le moyen de traitement thermique échangeant thermiquement avec au moins l'un des deux échangeurs de chaleur (8, 48).

3. Système selon la revendication 1 ou 2, dans lequel ledit moyen de traitement thermique comprend au moins deux dispositifs de chauffage électrique (46).

4. Système selon l'une quelconque des revendications précédentes, dans lequel la branche (U) dédiée au traitement thermique d'une batterie (42) du véhicule comprend au moins un échangeur de chaleur avec un onduleur (40), un tel échangeur étant un évaporateur d'onduleur (38) permettant le refroidissement de l'onduleur (40).

5. Système selon l'une des revendications 2 à 4, dans lequel au moins l'un des échangeurs de chaleur (8, 48) est un condenseur relié à la batterie.

6. Système selon l'une des revendications 3 à 5, dans lequel l'un des dispositifs de chauffage électrique (46) est situé directement en amont de l'évaporateur d'onduleur (38).

7. Système selon l'une quelconque des revendications 3 à 6, dans lequel l'un des dispositifs de chauffage électrique (46) est situé directement en aval de l'échangeur de chaleur (48) avec la batterie (42).

8. Système selon l'une quelconque des revendications précédentes, dans lequel les dispositifs de détente (24, 26) et le dispositif de régulation de la pression (25) permettent une différence de pression entre celle du fluide réfrigérant circulant dans l'échangeur de chaleur (48) dédié à la batterie (42) et celle du fluide réfrigérant circulant dans l'évaporateur (28) dédié à l'air conditionné destiné à circuler vers l'habitacle du véhicule.

9. Système selon l'une quelconque des revendications 3 à 8, dans lequel les dispositifs de chauffage électrique (26), l'un des dispositifs de détente (24), le dispositif de régulation de la pression (25) sont disposés dans un même et unique module rapporté formant un dispositif (60) dédié au contrôle et à la régulation du comportement thermique de la batterie (42).

10. Système selon la revendication précédente, dans lequel le module rapporté formant un dispositif (60) dédié au contrôle et à la régulation du comportement thermique de la batterie (42) comprend aux moins quatre bornes (P1, P2, P3, P4) de connexion permettant son interconnexion à la boucle (B) de climatisation et son interconnexion aux échangeurs de chaleur (38, 48) dédiés à l'onduleur (40) et à la batterie (42).

11. Système selon la revendication précédente, dans lequel le module rapporté formant un dispositif (60) dédié au contrôle et à la régulation du comportement thermique de la batterie (42) comprend une unité électronique de commande (35) actionnant au moins l'un des éléments parmi le dispositif de chauffage électrique (46) et le dispositif de régulation de la pression (25).

12. Système selon l'une quelconque des revendications précédentes, dans lequel le dispositif de détente (24) compris dans le module formant un dispositif (60) dédié au contrôle et à la régulation du comportement thermique de la batterie (42) est piloté selon la température du fluide réfrigérant en sortie de la branche (U) selon le sens d'écoulement du fluide réfrigérant dans cette branche.

13. Système selon l'une quelconque des revendications 4 à 12, dans lequel l'échangeur de chaleur (48) dédié à la batterie (42) et l'évaporateur thermique (38) dédié à l'onduleur (40) sont reliés en série l'un avec l'autre pour former un module unitaire d'échange thermique (50).

14. Procédé de gestion thermique d'un système de conditionnement thermique selon l'une quelconque des revendications précédentes, dans lequel il comprend les étapes suivantes :
- mise en oeuvre de la boucle de climatisation (B) dédiée au flux d'air pulsé dans l'habitacle du véhicule,
- mise en ouvre de la branche (U) dédiée au traitement thermique d'une batterie (42) du véhicule,
- mise en oeuvre du dispositif de régulation de la pression (25) du fluide réfrigérant dans la branche (U) afin de l'ajuster à la pression du fluide réfrigérant en sortie de la branche (U) selon la pression du fluide réfrigérant en sortie d'un échangeur de chaleur (28), fonctionnant en mode évaporateur, de la boucle (B).

## Patentansprüche

1. Thermisches Aufbereitungssystem eines Kraftfahrzeugs, das Folgendes umfasst:
- eine Klimatisierungsschleife (B), in der ein Kühlmittel zirkuliert, und die einen Kompressor (2), mindestens einen Verdampfer (28), der das Abkühlen einer Luft erlaubt, die zum Zirkulieren zur Fahrgastzelle des Fahrzeugs bestimmt ist, und mindestens eine Entspannungsvorrichtung (26) umfasst,
- einen Zweig (U), der der thermischen Aufbereitung einer Batterie (42) des Fahrzeugs dediziert ist und mindestens einen Wärmeaustauscher (48) mit der Batterie (42) des Fahrzeugs und mindestens eine Entspannungsvorrichtung (24) umfasst,
**dadurch gekennzeichnet, dass** es eine Regulierungsvorrichtung des Drucks (25) umfasst, die es erlaubt, das Kühlmittel, das aus dem Zweig (U) austritt, auf einen Druckwert zu bringen, der mit dem des Kühlmittels identisch ist, das aus dem Verdampfer (28) der Klimatisierungsschleife (B) austritt, und dass der Zweig (U) ein thermisches Aufbereitungsmittel umfasst, das stromabwärts des Wärmeaustauschers (48) angeordnet ist, und ein thermisches Aufbereitungsmittel, das stromaufwärts des Wärmeaustauschers (48) gemäß der Strömungsrichtung des Kühlmittels angeordnet ist.

2. System nach Anspruch 1, wobei eine Klimatisierungsschleife (B) mindestens einen Wärmeaustauscher (8) umfasst, wobei das thermische Aufbereitungsmittel thermisch mit mindestens einem der Wärmeaustauscher (8, 48) austauscht.

3. System nach Anspruch 1 oder 2, wobei das thermische Aufbereitungsmittel mindestens 2 elektrische Heizvorrichtungen (46) umfasst.

4. System nach einem der vorhergehenden Ansprüche, wobei der Zweig (U), der der thermischen Aufbereitung einer Batterie (42) des Fahrzeugs dediziert ist, mindestens einen Wärmeaustauscher mit einem Wechselrichter (40) umfasst, wobei ein solcher Wärmeaustauscher ein Wechselrichterverdampfer (38) ist, der das Kühlen des Wechselrichters (40) erlaubt.

5. System nach einem der Ansprüche 2 bis 4, wobei mindestens einer der Wärmeaustauscher (8, 48) ein mit der Batterie verbundener Kondensator ist.

6. System nach einem der Ansprüche 3 bis 5, wobei eine der elektrischen Heizvorrichtungen (46) direkt stromaufwärts des Wechselrichterverdampfers (38) liegt.

7. System nach einem der Ansprüche 3 bis 6, wobei eine der elektrischen Heizvorrichtungen (46) direkt stromabwärts des Wärmeaustauschers (48) mit der Batterie (42) liegt.

8. System nach einem der vorhergehenden Ansprüche, wobei die Entspannungsvorrichtungen (24, 26) und die Regulierungsvorrichtung des Drucks (25) einen Druckunterschied zwischen dem des Kühlmittels, das in dem Wärmeaustauscher (48), der der Batterie (42) dediziert ist, zirkuliert, und dem des Kühlmittels, das in dem Verdampfer (28) zirkuliert, der der Luftaufbereitung dediziert ist, die zu der Fahrgastzelle des Fahrzeugs zirkulieren soll, erlauben.

9. System nach einem der Ansprüche 3 bis 8, wobei die elektrischen Heizvorrichtungen (26), eine der Entspannungsvorrichtungen (24), die Regulierungsvorrichtung des Drucks (25) in ein und demselben einzigen angebauten Modul angeordnet sind, das eine dedizierte Vorrichtung (60) für die Steuerung und Regulierung des thermischen Verhaltens der Batterie (42) bildet.

10. System nach dem vorhergehenden Anspruch, wobei das angebaute Modul, das eine Vorrichtung (60), die der Steuerung und Regulierung des thermischen Verhaltens der Batterie (42) dediziert ist, bildet, mindestens 4 Anschlussklemmen (P1, P2, P3, P4) umfasst, die seine Anbindung an die Klimatisierungsschleife (B) und Anbindung an die Wärmeaustauscher (38, 48), die dem Wechselrichter (40) und der Batterie (42) dediziert sind, erlauben.

11. System nach dem vorhergehenden Anspruch, wobei das angebaute Modul, das eine Vorrichtung (60) bildet, die der Kontrolle und der Regulierung des thermischen Verhaltens der Batterie (42) dediziert ist, eine elektronische Steuereinheit (35) umfasst, die mindestens eines der Elemente der elektrischen Heizvorrichtung (46) und/oder der Regulierungsvorrichtung des Drucks (25) betätigt.

12. System nach einem der vorhergehenden Ansprüche, wobei die Entspannungsvorrichtung (24), die in dem Modul enthalten ist, das eine Vorrichtung (60) bildet, die der Steuerung und Regulierung des thermischen Verhaltens der Batterie (42) dediziert ist, gemäß der Temperatur des Kühlmittels am Ausgang des Zweigs (U) gemäß der Strömungsrichtung des Kühlmittels in diesem Zweig gesteuert wird.

13. System nach einem der Ansprüche 4 bis 12, wobei der Wärmeaustauscher (48), der der Batterie (42) und der thermische Verdampfer (38), der dem Wechselrichter (40) dediziert ist, dediziert ist, in Serie miteinander verbunden sind, um ein einziges Wärmeaustauschmodul (50) zu bilden.

14. Verfahren zur thermischen Verwaltung eines thermischen Aufbereitungssystems nach einem der vorhergehenden Ansprüche, das die folgenden Schritte aufweist:
- Umsetzen der Klimatisierungsschleife (B), die dem in die Fahrgastzelle des Fahrzeugs gepulsten Luftstrom dediziert ist,
- Umsetzen des Zweigs (U), der der thermischen Aufbereitung einer Batterie (42) des Fahrzeugs dediziert ist,
- Umsetzen der Regulierungsvorrichtung des Drucks (25) des Kühlmittels in dem Zweig (U), um den Druck des Kühlmittels am Ausgang des Zweigs (U) gemäß dem Druck des Kühlmittels am Ausgang eines Wärmeaustauschers (28), der im Verdampfermodus funktioniert, der Schleife (B) einzustellen.

## Claims

1. Thermal conditioning system for a motor vehicle comprising:
- an air-conditioning loop (B) in which a refrigerant circulates and comprising a compressor (2), at least one evaporator (28) making it possible to cool air intended to circulate toward the vehicle interior, and at least one expansion device (26),
- a branch (U) dedicated to the thermal treatment of a battery (42) of the vehicle and comprising at least one exchanger of heat (48) with the battery (42) of the vehicle, and at least one expansion device (24), **characterized in that** it comprises a pressure regulation device (25) making it possible to bring the refrigerant outgoing from the branch (U) to a pressure value identical to that of the refrigerant outgoing from the evaporator (28) of the air-conditioning loop (B), and **in that** the branch (U) comprises a thermal treatment means arranged downstream of the heat exchanger (48) and a thermal treatment means arranged upstream of the heat exchanger (48), according to the direction of flow of the refrigerant.

2. System according to Claim 1, in which an air-conditioning loop (B) comprises at least one heat exchanger (8), the thermal treatment means exchanging thermally with at least one of the two heat exchangers (8, 48).

3. System according to Claim 1 or 2, in which said thermal treatment means comprises at least two electric heating devices (46).

4. System according to any one of the preceding claims, in which the branch (U) dedicated to the thermal treatment of a battery (42) of the vehicle comprises at least one exchanger of heat with an inverter (40), such an exchanger being an inverter evaporator (38) making it possible to cool the inverter (40).

5. System according to one of Claims 2 to 4, in which at least one of the heat exchangers (8, 48) is a condenser linked to the battery.

6. System according to one of Claims 3 to 5, in which one of the electric heating devices (46) is situated directly upstream of the inverter evaporator (38).

7. System according to any one of Claims 3 to 6, in which one of the electric heating devices (46) is situated directly downstream of the exchanger of heat (48) with the battery (42).

8. System according to any one of the preceding claims, in which the expansion devices (24, 26) and the pressure regulation device (25) allow for a pressure difference between that of the refrigerant circulating in the heat exchanger (48) dedicated to the battery (42) and that of the refrigerant circulating in the evaporator (28) dedicated to the conditioned air intended to circulate towards the vehicle interior.

9. System according to any one of Claims 3 to 8, in which the electric heating devices (26), one of the expansion devices (24), the pressure regulation device (25) are arranged in one and the same add-on module forming a device (60) dedicated to the control and regulation of the thermal behaviour of the battery (42).

10. System according to the preceding claim, in which the add-on module forming a device (60) dedicated to the control and regulation of the thermal behaviour of the battery (42) comprises at least four connection terminals (P1, P2, P3, P4) allowing it to be interconnected with the air-conditioning loop (B) and with the heat exchangers (38, 48) dedicated to the inverter (40) and to the battery (42).

11. System according to the preceding claim, in which the add-on module forming a device (60) dedicated to the control and regulation of the thermal behaviour of the battery (42) comprises an electronic control unit (35) actuating at least one of the elements out of the electric heating device (46) and the pressure regulation device (25).

12. System according to any one of the preceding claims, in which the expansion device (24) included in the module forming a device (60) dedicated to the control and regulation of the thermal behaviour of the battery (42) is driven according to the temperature of the refrigerant at the output of the branch (U) according to the direction of flow of the refrigerant in this branch.

13. System according to any one of Claims 4 to 12, in which the heat exchanger (48) dedicated to the battery (42) and the thermal evaporator (38) dedicated to the inverter (40) are linked in series with one another to form a unitary heat exchange module (50).

14. Thermal management method for a thermal conditioning system according to any one of the preceding claims, in which it comprises the following steps:
- implementation of the air-conditioning loop (B) dedicated to the pulsed flow of air into the vehicle interior,
- implementation of the branch (U) dedicated to the thermal treatment of a battery (42) of the vehicle,
- implementation of the pressure regulation device (25) for the refrigerant in the branch (U) in order to adjust it to the pressure of the refrigerant at the output of the branch (U) according to the pressure of the refrigerant at the output of a heat exchanger (28), operating in evaporator mode, of the loop (B).
